## Europäisches Patentamt

## European Patent Office

## Office européen des brevets

(19)

(11) **EP 0 501 323 B1**

(12) **EUROPÄISCHE PATENTSCHRIFT**

(45) Veröffentlichungstag und Bekanntmachung des Hinweises auf die Patenterteilung:
**26.06.1996 Patentblatt 1996/26**

(51) Int Cl.⁶: **G02B 6/44**

(21) Anmeldenummer: **92102908.8**

(22) Anmeldetag: **21.02.1992**

(54) **Sensor in Form eines Lichtwellenleiterkabel zur Wärmequellenortung**

Sensor fiber optic cable for locating heat sources

Senseur en forme d'un câble à fibre optique pour localiser des sources de chaleur

(84) Benannte Vertragsstaaten:
**AT BE CH DE FR GB LI NL**

(30) Priorität: **26.02.1991 DE 9102261 U**
**21.08.1991 DE 4127593**

(43) Veröffentlichungstag der Anmeldung:
**02.09.1992 Patentblatt 1992/36**

(73) Patentinhaber: **Felten & Guilleaume Energietechnik AG**
**D-51058 Köln (DE)**

(72) Erfinder:
• **Harjes, Bernd, Dr.-Ing.**
**W-5060 Bergisch Gladbach 2 (DE)**
• **Levacher, Friedrich Karl, Dr.**
**W-5024 Pulheim-Brauweiler (DE)**

(56) Entgegenhaltungen:
EP-A- 0 203 249          EP-A- 0 303 740
DE-A- 3 309 996          DE-U- 9 001 893

• PATENT ABSTRACTS OF JAPAN vol. 13, no. 235 (E-766) 30. Mai 1989 ; & JP-A-1 041 116

**Beschreibung**

Die Erfindung betrifft einen Sensor in Form eines Lichtwellenleiterkabel (LWL-Kabel) zur Wärmequellenortung mit folgendem Aufbau: Mindestens ein Lichtwellenleiter (eine beschichtete optische Faser) ist mit Überlänge in ein Röhrchen aus Metall oder Kunststoff eingebracht (LWL-Röhrchen), das einen Außendurchmesser zwischen 1 und 5 mm hat, und um das LWL-Röhrchen ist ein Schutzmantel aus Kunststoff oder aus einer Gummimischung extrudiert.

Ein solches LWL-Röhrchen ohne Schutzmantel ist in der DE-U1-90 01 893 beschrieben. In diesem Röhrchen sind LWL-Nachrichtenleiter angeordnet, und das Röhrchen ist in ein elektrisches Freileiterseil anstelle eines Drahtes einer unteren Drahtlage eingeseilt. Das LWL-Röhrchen dient hier nicht zur Wärmequellenortung, und es liegt auch kein reines LWL-Kabel vor. Das gleiche trifft auf das LWL-Röhrchen in der DE-C2-33 09 996 zu. Dort ist die Herstellung eines LWL-Röhrchens für ein Nachrichtenkabel beschrieben, wobei mindestens ein Lichtwellenleiter mit Überlänge in ein Rohr eingebettet und punktweise mit demselben verklebt wird. Das Rohr wird aus einem Metallband um den Lichtwellenleiter längsgeformt und verschweißt, und es erhält Kerben (eine Wellung) eingedrückt.

LWL-Röhrchen, die LWL-Temperatursensoren allein oder zusammen mit LWL-Nachrichtenleitern enthalten, sind in der DE-A1-35 18 909 beschrieben. Diese LWL-Röhrchen bestehen aus faserverstärktem Kunststoff, und sie sind in Schirm, Aderzwickel oder Leiter eines Starkstromkabels für Mittelspannung eingelegt. Hiermit ist eine Wärmequellenortung möglich. So ist in der Z. Elektrizitätswirtschaft Jg. 89 (1990) S. 793 ein Einleiter-VPE-Mittelspannungskabel mit integrierten Lichtwellenleitern erwähnt, bei dem neben der Energie- und Informationsübertragung die sensorischen Eigenschaften der im Schirmbereich des Kabels angeordneten Lichtwellenleiter genutzt werden. Damit ist es möglich, ein Temperaturprofil längs der gesamten Kabelstrecke mit einer Ortungsgenauigkeit im Meterbereich zu erstellen. Dabei kann ein einzelner Lichtwellenleiter sowohl als Temperatursensor wie auch als Nachrichtenleiter dienen. Aber auch hier liegt kein reines LWL-Kabel vor.

Daher liegt der Erfindung die Aufgabe zugrunde, einen Sensor in Form eines Lichtwellenleiter-Kabels zur Wärmequellenortung anzugeben, der eine höhere Ortungsgenauigkeit hat.

Diese Aufgabe wird erfindungsgemäß dadurch gelöst, daß a) die optische Faser mit einem temperaturfesten Stoff, z. B. mit Polytetrafluorethylen, beschichtet ist, b) der als Temperatursensor dienende Lichtwellenleiter möglichst eng gewendelt ist, so daß der zulässige Krümmungsradius nicht unter-, und die zulässige optische Dämpfung nicht überschritten wird, und daß c) der Mantel glatt oder gewellt ist und er einen Außendurchmesser zwischen 3 und 15 mm, typisch sind etwa 10 mm, hat. Einen wesentlichen Beitrag zur Erfindung leistet das Merkmal b), die Ausbildung des Lichtwellenleiters in Form einer Wendel, insbesondere wenn die Wendel dadurch festgelegt ist, daß der Lichtwellenleiter mit einer definierten Schlaglänge um einen formstabilen, biegsamen runden Kern aus Kunststoff oder Metall gewickelt ist, der über seine ganze Länge einen konstanten definierten Radius hat.

Der mit der Erfindung erzielte Vorteil besteht darin, daß man nunmehr ein reines LWL-Kabel zur Ortung einer vom Kabel unabhängigen Wärmequelle hat. Zudem wird durch die Wendelform des Lichtwellenleiters die Ortungsgenauigkeit, gemessen wird mittels Impulsreflexion, erhöht.

Vorteilhafte Ausbildungen der Erfindung sind in den weiteren Ansprüchen angegeben. Anspruch 2 betrifft die Werte für Wickelkerndurchmesser und Schlaglänge, die Ansprüche 3 und 4 betreffen die Lichtwellenleiter in dem Röhrchen, Anspruch 5 betrifft das LWL-Röhrchen, und die Ansprüche 6 bis 8 betreffen den Kabelmantel.

Mehrere Ausführungsbeispiele des erfindungsgemäßen Sensors zur Wärmequellenortung sind in der Zeichnung im Prinzip dargestellt und werden nachfolgend näher beschrieben.

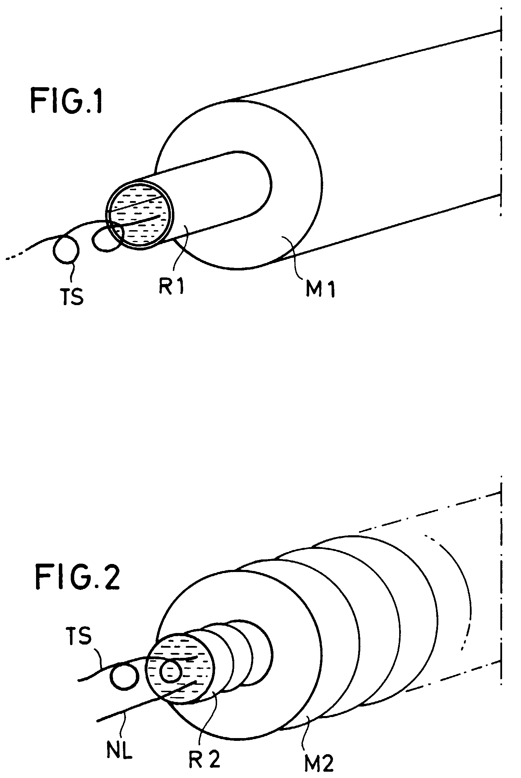

Fig. 1 verdeutlicht einen Sensor in Form eines LWL-Kabels mit folgendem Aufbau: Das LWL-Röhrchen R1 ist ein glattes, aus einem Band längsgeformtes und geschweißtes Stahlröhrchen mit einem Außendurchmesser von 3 mm. Die optische Faser des Lichtwellenleiters TS ist mit Tefzel (Handelsname für Polytetrafluorethylen PTFE) beschichtet. Der als Temperatursensor dienende Lichtwellenleiter ist in der Form einer möglichst engen Wendel in das Röhrchen eingebracht. Zudem hat das Röhrchen eine Gel-Füllung zur Längswasserabdichtung. Um das LWL-Röhrchen ist der Mantel M1 aus PE (Polyethylen) mit glattem (nicht gewelltem) Umfang und einem Durchmesser von etwa 10 mm extrudiert.

Der Lichtwellenleiter ist so stark gewendelt, daß der zulässige Krümmungsradius der optischen Faser nicht unter-, und die zulässige optische Dämpfung nicht überschritten wird. Bei geeigneter Wahl von Krümmungsradius und Dämpfung könnte der LWL-Temperatursensor zugleich als Nachrichtenleiter dienen.

Durch die Wendelform wird erreicht, daß die Ortungsgenauigkeit der Messung erhöht wird: Der eingekoppelte optische Impuls, dessen Auflösungsvermögen im Meterbereich liegt, folgt dem gegenüber der Kabelachse längeren Weg der gewendelten Faser. Somit wird bei einer quasi-punktuellen Wärmeeinwirkung auf das Kabel eine größere Faserlänge als die Kabellänge beeinflußt, und das optische Signal wird stärker als bei einer quasi-gestreckten Faser. Zudem wird die Meßgenauigkeit hinsichtlich der Längenauflösung erhöht.

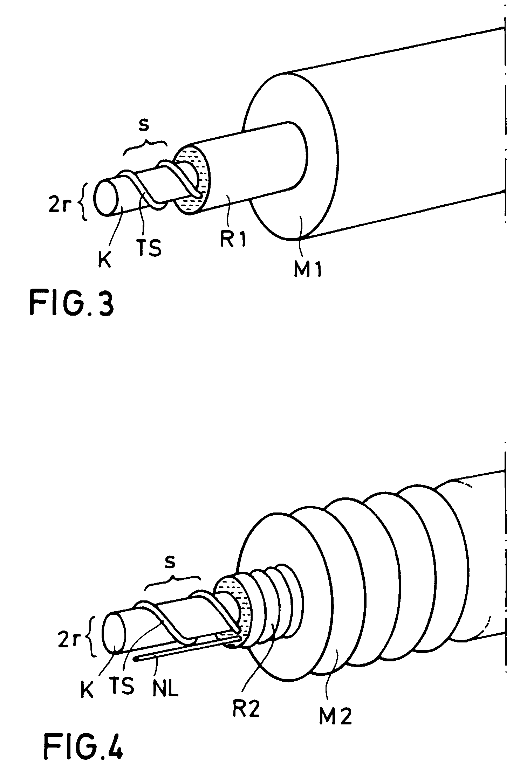

Wie Fig. 3 zeigt, kann die LWL-Wendel nach der weiteren Erfindung dadurch festgelegt werden, daß der Lichtwellenleiter mit der definierten Schlaglänge s um den formstabilen, biegsamen runden Kern K aus Kunststoff oder Metall gewickelt wird, der über seine ganze Länge den konstanten definierten Durchmesser 2r hat. Bei dem im Beispiel genannten Röhrchen-Außendurchmesser von 3 mm liegen die Werte für den Wickelkerndurchmesser 2r um 2,0 mm, und die für die Schlaglänge s um 5,0 mm.

Man kann das Vielfache, um das die Genauigkeit der Wärmequellenortung - bei einem Lichtwellenleiter mit dem Radius $r_o$, der mit der Schlaglänge s auf einen Kern mit dem Radius r gewickelt ist, gegenüber einem nicht-gewendelten Lichtwellenleiter - erhöht wird, durch das Verhältnis der Länge L des Lichtwellenleiter zur Länge 1 des Kerns (= Länge des Kabels) nach folgender Gleichung ausdrücken

$$L / l = (4 (r + r_o)^2 \, \pi^2 / s^2 + 1)^{1/2}.$$

Fig. 2 zeigt einen Sensor in Form eines LWL-Kabels mit einem anderen Aufbau: Hier ist das LWL-Röhrchen R2 ein wendelförmig (schraubenlinienförmig) gewelltes Metallröhrchen. Darin ist neben dem eng gewendelten Lichtwellenleiter TS, der als Temperatursensor dient, der nicht gewendelte Lichtwellenleiter NL, der als Nachrichtenleiter dient, angeordnet, und über dem LWL-Röhrchen ist der Kunststoff-Wellmantel M2 aufgebracht. - Auch in diesem Fall kann, wie Fig. 4 zeigt, die LWL-Wendel dadurch festgelegt werden, daß der Lichtwellenleiter mit der Schlaglänge s um einen Kunststoff- oder Metallkern vom Durchmesser 2r gewickelt wird.

Es ist auch möglich, in ein größeres Röhrchen mehrere eng gewendelte Lichtwellenleiter TS als Temperatursensoren und mehrere weit oder nicht gewendelte Lichtwellenleiter NL als Nachrichtenleiter oder in anderer Funktion einzubringen. Als optische Fasern werden die gängigen Gradienten- oder Monomodefasern verwendet.

Statt eines geschweißten, kann auch ein gewickeltes Metallröhrchen, und statt eines Metallröhrchens kann auch ein entsprechend verstärktes Kunststoffröhrchen eingesetzt werden. Die Röhrchenfüllung zur Längswasserabdichtung besteht bevorzugt aus einem entsprechenden Gel, seltener aus einem thixotropen Stoff oder aus einem Quellpulver.

Vorteilhafterweise besteht der Kabelmantel aus einem halogenfreien, nicht toxischen, schwer entflammbaren und selbstverlöschenden Werkstoff, beispielsweise aus einer halogenfreien Gummimischung. Zur Erhöhung der Zugfestigkeit kann er mit Glasrovings, Kevlarfäden oder -schnüren (K. Handelsmarke für Aramid-Fasern) oder Polystalelementen (P. Handelsmarke für GFK-Profile) verstärkt werden. Um längs der Kabelstrecke eindeutige Potentiale zu erreichen, kann er durch Zusatz von Ruß schwachleitend gemacht werden.

Das Hauptanwendungsgebiet des erfindungsgemäßen sensors ist die Brandüberwachung in den Schächten von U-, S- oder Stadtbahn. Gerade in Tunnelbereichen ist der Bahnbetrieb durch, insbesondere versteckte, Brandherde gefährdet. Ein solcher Brandherd wird der Sensor in Form eines LWL-Kabels anfangs punktuell erfassen, und die elektronische Meßauswertung am Kabelende wird Ort und momentan erreichte Temperatur signalisieren bzw. ausdrucken. Um bei einer Brandeinwirkung auf das Kabel keine zusätzliche Gefährdung auszulösen, werden umweltfreundliche Kabelwerkstoffe eingesetzt.

Auch im Bergbau ergibt sich ein typisches Anwendungsgebiet. Hier werden robustere und zumeist flexible Sensoren gefordert. Erreicht wird dies durch die Verstärkung und Wellung von LWL-Röhrchen und Mantel sowie durch halogenfreie Gummimischungen als Mantelwerkstoff.

## Patentansprüche

1. Sensor in Form eines Lichtwellenleiterkabels zur Wärmequellenortung mittels Impulsreflexion mit folgendem Aufbau: mindestens ein beschichter Lichtwellenleiter (TS) ist mit Überlänge in Form einer Wendel in ein Röhrchen (R1, R2) aus Metall oder Kunststoff eingebracht, das einen Außendurchmesser zwischen 1 und 5 mm hat, wobei um das Röhrchen ein extrudierter Schutzmantel (M1, M2) aus Kunststoff oder aus einer Gummimischung aufgebracht ist,
   **dadurch gekenzeichnet**, daß

   a) der Lichtwellenleiter (TS) als Temperatursensor dient und mit einem temperaturfesten Stoff beschichtet ist,
   b) der Lichtwellenleiter (TS) mit einer über seine Länge einheitlichen Schlaglänge s um einen formstabilen, biegsamen runden Kern (K) aus Kunststoff oder Metall möglichst eng gewickelt ist, der einen über seine Länge einheitlichen Radius r hat und der Radius r so gewählt ist, daß der für den Lichtwellenleiter (TS) zulässige Krümmungsradius nicht unter-, und die zulässige optische Dämpfung nicht überschritten wird, und
   c) der Schutzmantel (M1, M2) glatt oder gewellt ist und einen Außendurchmesser zwischen 3 und 15 mm hat.

2. Sensor nach Anspruch 1, **dadurch gekennzeichnet**, daß bei einem Außendurchmesser des Röhrchens (R1, R2) von 3 mm der Wickelkerndurchmesser (2r) etwa 2 mm und die Lichtwellenleiter-Schlaglänge (s) etwa 5 mm ist.

3. Sensor nach einem der Ansprüche 1 oder 2, **dadurch gekennzeichnet**, daß in dem Röhrchen (R1, R2) mindestens ein eng gewendelter Lichtwellenleiter (TS) und daneben mindestens ein weit oder nicht gewendelter Lichtwellenleiter (NL) angeordnet ist.

4. Sensor nach Anspruch 3, **dadurch ge-kennzeich-**

**net**, daß der weniger gewendelte Lichtwellenleiter (NL) ein Nachrichtenleiter ist.

5. Sensor nach einem der Ansprüche 1 bis 4, **dadurch gekennzeichnet**, daß das Röhrchen (R1, R2) glatt oder gewellt ist, es als Metallröhrchen geschweißt oder gewickelt ist, und es innen neben dem(n) Lichtwellenleiter(n) eine längswasserdichte Füllung hat.

6. Sensor nach einem der Ansprüche 1 bis 5, **dadurch gekennzeichnet**, daß der Schutzmantel (M1, M2) aus einem halogenfreien, nicht toxischen, schwer entflammbaren und selbstverlöschenden Werkstoff besteht, und er erforderlichenfalls mit langgestreckten zugfesten Elementen verstärkt ist.

7. Sensor nach Anspruch 6, **dadurch gekennzeichnet**, daß der Schutzmantel (M1, M2) elektrisch schwachleitend ist.

8. Sensor nach Anspruch 6 oder 7, **dadurch gekennzeichnet**, daß als Mantelwerkstoff eine halogenfreie Gummimischung, als Verstärkungselemente Glasrovings, Kevlarfäden oder -schnüre oder Polystalelemente und als Leitwerkstoff Ruß eingesetzt werden.

**Claims**

1. A sensor in the form of a light wave guide cable for locating heat sources by means of impulse reflection, having the following construction:
   at least one coated light wave guide (TS) is - in the form of a helix - introduced into a tubule (R1, R2) of metal or a synthetic material so as to project therefrom, which tubule has an outer diameter between 1 and 5 mm, an extruded protective sheath (M1, M2) of a synthetic material or of a rubber compound being applied around the tubule, characterised in that

   a) the light wave guide (TS) serves as a temperature sensor and is coated with a temperature-resistant material,
   b) the light wave guide (TS) is wound around a dimensionally-stable, flexible, round core (K) of a synthetic material or metal as closely as possible and with a uniform length of twist s over its length, which core (K) has a uniform radius r over its length and the radius r is selected in such a manner that the radius of curvature permissible for the light wave guide (TS) is not fallen below and the permissible optical attenuation is not exceeded, and
   c) the protective sheath (M1, M2) is smooth or undulated and has an outer diameter between 3 and 15 mm.

2. A sensor in accordance with Claim 1, characterised in that with an outer diameter of the tubule (R1, R2) of 3 mm, the winding core diameter (2r) is approximately 2 mm and the length of twist (s) of the light wave guide is approximately 5 mm.

3. A sensor in accordance with one of Claims 1 or 2, characterised in that in the tubule (R1, R2) there is arranged at least one closely coiled light wave guide (TS) and in addition at least one light wave guide (NL) which is loosely coiled or not coiled at all.

4. A sensor in accordance with Claim 3, characterised in that the less coiled light wave guide (NL) is a communication conductor.

5. A sensor in accordance with any one of Claims 1 to 4, characterised in that the tubule (R1, R2) is smooth or undulated, it is welded or rolled up to form a metal tubule, and it has a longitudinally water tight filling in its interior in addition to the light wave guide (s).

6. A sensor in accordance with any one of Claims 1 to 5, characterised in that the protective sheath (M1, M2) is composed of a halogen-free, non-toxic, flame-resistant and self-extinguishing material, and is if required reinforced with elongated, tension-proof elements.

7. A sensor in accordance with Claim 6, characterised in that the protective sheath (M1, M2) conducts electricity poorly.

8. A sensor in accordance with Claim 6 or 7, characterised in that a halogen-free rubber compound is used as sheath material, rovings, Kevlar threads or cords or Polystal elements are used as reinforcing elements, and carbon black is used as a conductive material.

**Revendications**

1. Capteur en forme de câble à fibre optique pour la localisation des sources de chaleur au moyen de la réflexion des impulsions, ayant la construction suivante :

   - au moins une fibre enduite (TS) est insérée en forme d'hélice avec une surlongueur dans un petit tube (R1, R2) en matière plastique ou en métal ayant un diamètre extérieur compris entre 1 et 5 mm, une gaine protectrice extrudée (M1, M2) en matière plastique ou en un mélange de caoutchouc recouvrant le petit tube,

caractérisé en ce que :

  a) la fibre optique (TS) sert de capteur de température et est enduite d'une matière thermorésistante,

  b) la fibre optique (TS) est enroulée avec un pas (s) uniforme sur sa longueur le plus étroitement possible autour d'un noyau rond (K) de forme stable, souple, en matière plastique ou en métal, noyau qui a un même rayon **r** sur toute sa longueur, ce rayon **r** est choisi de sorte que le rayon de courbure de la fibre optique (TS) n'est pas inférieur au rayon de courbure autorisé et ne dépasse pas l'amortissement optique toléré,

  c) la gaine protectrice (M1, M2) est lisse ou ondulée et a un diamètre extérieur compris entre 3 et 15 mm.

2. Capteur selon la revendication 1, caractérisé en ce que pour un diamètre extérieur du petit tube (R1, R2) de 3 mm, le diamètre (2r) du noyau d'enroulement est d'environ 2 mm et le pas (s) de la fibre optique est d'environ 5 mm.

3. Capteur selon la revendication 1 ou 2, caractérisé en ce que dans le petit tube (R1, R2) se trouve au moins une fibre optique à hélice étroite (TS) et à côté de celle-ci au moins une fibre optique (NL) à hélice large ou non enroulée en hélice.

4. Capteur selon la revendication 3, caractérisé en ce que la fibre optique en hélice la moins étroite (N1) est un conducteur de transmission d'informations.

5. Capteur selon une des revendications 1 à 4, caractérisé en ce que le petit tube (R1, R2) est lisse ou ondulé, il est en métal soudé ou enroulé et a un remplissage d'étanchéité, longitudinal, en plus de la /des fibre(s) optique(s).

6. Capteur selon l'une des revendications 1 à 5, caractérisé en ce que la gaine (M1, M2) se compose d'une matière non halogénée, non toxique, difficilement inflammable et s'éteignant d'elle-même et elle peut être renforcée le cas échéant par des éléments longitudinaux résistant à la traction.

7. Capteur selon la revendication 6, caractérisé en ce que la gaine (M1, M2) est faiblement conductrice d'électricité.

8. Capteur selon la revendication 6 ou 7, caractérisé en ce que l'on utilise comme matière pour la gaine, un mélange de caoutchouc non halogéné, comme élément de renfort, des fibres de verre, des fils ou des cordons de kevlar, ou des éléments en matière plastique renforcés par des fibres de verre et que l'on utilise de noir de fumées comme matière conductrice.

FIG.1

TS  R1  M1

FIG.2

TS

NL  R2  M2

FIG.3

FIG.4